# EUROPEAN PATENT APPLICATION

(11) **EP 2 736 224 A1**
(43) Date of publication of application: **28.05.2014**
(21) Application number: 13194081.9
(22) Date of filing: 22.11.2013
(51) Int. Cl.: H04L 29/12, H04L 29/06, H04L 29/08

(54) **System for encrypting content name**

(30) Priority: 26.11.2012 KR 20120134447
(71) Applicant: Samsung Electronics Co., Ltd, Gyeonggi-do 443-742 (KR)
(72) Inventor: Kim, Dae Youb, 446-712 Gyeonggi-do (KR)
(74) Representative: Lubberdink, Pim

(57) **Abstract**

A system for encrypting a name of content stored in a node of a hierarchical network of nodes. A content receiving node encrypts a name of a predetermined node among names of nodes included in a content name, such as by using a hash function, and transmits the encrypted content name to receive the stored content. A relay node receives the content name including the encrypted name of the node and decrypts the encrypted name of the node, such as by using a reference table. The relay node uses the decrypted node name to relay the content request to the content storage node. Since the content name is encrypted, content routing may be performed without disclosing information associated with a hierarchical structure in which the content is stored.

## Description

### BACKGROUND

### 1. Field

The following description relates to a content-centric network (CCN) to perform routing using a content name and to technology of encrypting a name of a node included in a content name.

### 2. Description of Related Art

A cloud computing environment refers to a computing environment in which content is stored in a storage space located remotely from a computer that accesses the content, instead of storing the contents locally in the computer, and for accessing the contents using a network. In such a cloud computing environment, networking may be performed based on content. Accordingly, a user may want to accessing content, but such a user may have little interest in the architecture of the server and other parts of the network that stores the contents.

To access content using a content name, the content name needs to be disclosed in a network, such as the cloud computing environment described above. However, the content name may reveal information about network structure or similar information, even if the content name is the only information shared. Accordingly, information associated with content that a user desires to access may be leaked undesirably if content name information is shared. Such leaking may cause secondary damage such as hacking.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a content receiving node for receiving content stored in a content storage node in a hierarchical network of nodes using a content name for addressing the content, the content name comprising names of the content storage node and at least one parent node of the content storage node, includes an encryption selector configured to select a name to be encrypted from the names included in the content name, an encryption device configured to encrypt the selected name, and a transmitter configured to transmit, to the content storage node, an encrypted content name comprising the encrypted name.

For example, the encrypted content name is obtained by replacing the selected name by the corresponding encrypted name in the content name. One or more names among the names included in the content name may be selected for encryption.

The transmitter may transmit the encrypted content name directly to the content storage node or indirectly, e.g. via relay nodes. The content name functions as an address, i.e. the content name defines a path from the content receiving node to the content storage node. The invention increases the privacy of the users. The encrypted content name prevents an unauthorized user to gather information about the network structure. Such information causes vulnerability to hacking, because if a potential hacker has information about a network structure that is intended to be hidden, it provides the potential hacker with an opportunity to ascertain weak spots and vulnerabilities of a network based on the network structure.

The encryption device may be configured to encrypt the selected name using a hash function.

In the case of encrypting a content name using a hash function, there is no need to manage an encryption key used to perform encryption, as the secrecy of the encryption process is based upon the secrecy of the hash function. Thus, the use of such a hash function allows encryption of content names without the need to share the encryption key used to performed encryption. Accordingly, routing may be simplified and network overhead may decrease.

The content receiving node may further include a receiver configured to receive a response to the encrypted content name from the content storage node.

The content receiving node may provide that the encryption device is configured to store the selected name and the encrypted name.

The content receiving node may provide that the receiver is configured to verify whether the received response is a response corresponding to the encrypted content name, based on the selected name and the encrypted name.

In another general aspect, a relay node for relaying content in a hierarchical network of nodes includes a receiver configured to receive a content name for addressing the content, the content name comprising names of a content storage node storing the content and at least one parent node of the content storage node, wherein at least one of the names included in the content name is encrypted, a decryption device configured to decrypt an encrypted name of a neighboring child node of the relay node when the name of the neighboring child node is an encrypted name among names of nodes included in the content name, and a transmitter configured to transmit the content name to the neighboring child node corresponding to the decrypted name.

The same advantages and effects apply to the relay node as described above with respect to the content receiving node according to the invention.

The at least one name may be encrypted using a hash function.

The relay node may provide that the relay node is connected to a plurality of neighboring child nodes, the relay node further including a reference table comprising names of the plurality of neighboring child nodes and hash values corresponding to the names of the plurality of neighboring child nodes encrypted using the hash function, and that the decryption device is configured to search the reference table for the encrypted name associated with the neighboring child node that is included in the content name, and to decrypt the encrypted name of the neighboring child node.

The receiver may be configured to receive a response to the transmitted content name from the neighboring child node.

The transmitter may be configured to forward the response by replacing an unencrypted name of the neighboring child node included in the response with the encrypted name of the neighboring child node.

The decryption device may be configured to store the decrypted name of the neighboring child node.

The decryption device may be configured to additionally store a flag indicating that the unencrypted name of the neighboring child node is to be encrypted and be forwarded, and the transmitter may be configured to replace the unencrypted name of the neighboring child node included in the response with the encrypted name of the neighboring child node by referring to the flag.

The decryption device may be configured to store the encrypted name of the neighboring child node in a pending interest table (PIT).

The transmitter may be configured to search the PIT for the encrypted name of the neighboring child node from which the response is received, and to forward the response when the encrypted name of the neighboring child node is present within the PIT.

In another general aspect, a content relaying method of a relay node in a hierarchical network of nodes includes receiving a content name for addressing the content, the name comprising names of a content storage node storing the content and at least one parent node of the content storage node, wherein at least one of the names included in the content name is encrypted, decrypting an encrypted name of a neighboring node of the relay node when the name of the neighboring child node is an encrypted name among names of nodes included in the content name, and transmitting the content name to the neighboring child node corresponding to the decrypted name.

The same advantages and effects apply to the content relaying method as described above with respect to the content receiving node and the relay node according to the invention.

The at least one name may be encrypted using a hash function.

The method may provide that the relay node is connected to a plurality of neighboring child nodes, and the method may further include generating a reference table comprising names of the plurality of neighboring child nodes and hash values corresponding to the names of the plurality of neighboring child nodes encrypted using the hash function, and
the decrypting includes searching the reference table for the encrypted name associated with the neighboring child node that is included in the content name, and decrypting the encrypted name of the neighboring child node.

The method may further include receiving a response to the transmitted content name from the neighboring child node.

The method may further include forwarding the response by replacing an unencrypted name of the neighboring child node included in the response with the encrypted name of the neighboring child node.

The method may further include storing the decrypted name of the neighboring child node.

The method may further include additionally storing a flag indicating that the unencrypted name of the neighboring child node is to be encrypted and be forwarded, wherein the forwarding comprises replacing the unencrypted name of the neighboring child node included in the response with the encrypted name of the neighboring child node response by referring to the flag.

The method may further include storing the encrypted name of the neighboring child node in a pending interest table (PIT).

The method may further include searching the PIT for the encrypted name of the neighboring child node from which the response is received, and forwarding the response when the encrypted name of the neighboring child node is present within the PIT.

In another general aspect, a non-transitory computer-readable medium stores a program for a relaying method of a relay node, the program comprising instructions for causing a computer to perform the method discussed above.

In another general aspect, a content storage node in a hierarchical structure for providing content to a content receiving node includes a receiver configured to receive a content name from a neighboring relay node, comprising names of the content storage node and at least one parent node defining a path to the content storage node from the content receiving node, wherein at least one of the names was previously encrypted and the encrypted at least one name was decrypted by the neighboring relay node, and a transmitter configured to transmit a response to the neighboring relay node, corresponding to the content name, to be sent to the content receiving node.

The response may include content corresponding to the content name.

The content storage node may further include a content storage device, wherein the content is stored in the content storage device.

The content storage node may provide that transmitting the response comprises routing the content through the hierarchical structure to the content receiving node using the decrypted content name.

The content storage node may provide that at least one of the names was previously encrypted using a hash function.

In another general aspect, a system for routing content in a hierarchical network comprises a content receiving node as described above and/or a relay node as described above.

Other features and aspects will be apparent from the following detailed description, the drawings, and the claims.

### BRIEF DESCRIPTION OF THE DRAWINGS

FIG. 1 is a diagram illustrating an example of performing routing using a content address, according to an example embodiment.
FIG. 2 is a block diagram illustrating an example of a content receiving node, according to an example embodiment.
FIG. 3 is a block diagram illustrating an example of a relay node, according to an example embodiment.
FIG. 4 is a diagram illustrating an example of a reference table, according to an example embodiment.
FIG. 5 is a flowchart illustrating an example of a relaying method of a relay node, according to an example embodiment.
FIG. 6 is a flowchart illustrating an example of an operation of storing a decrypted name of a neighboring child node in the relaying method of FIG. 5, according to an example embodiment.
FIGS. 7A and 7B are flowcharts illustrating examples of an operation of storing an encrypted name of a neighboring child node in the relaying method of FIG. 5, according to an example embodiment.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the systems, apparatuses and/or methods described herein will be apparent to one of ordinary skill in the art. The progression of processing steps and/or operations described is an example; however, the sequence of and/or operations is not limited to that set forth herein and may be changed as is known in the art, with the exception of steps and/or operations necessarily occurring in a certain order. Also, descriptions of functions and constructions that are well known to one of ordinary skill in the art may be omitted for increased clarity and conciseness.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

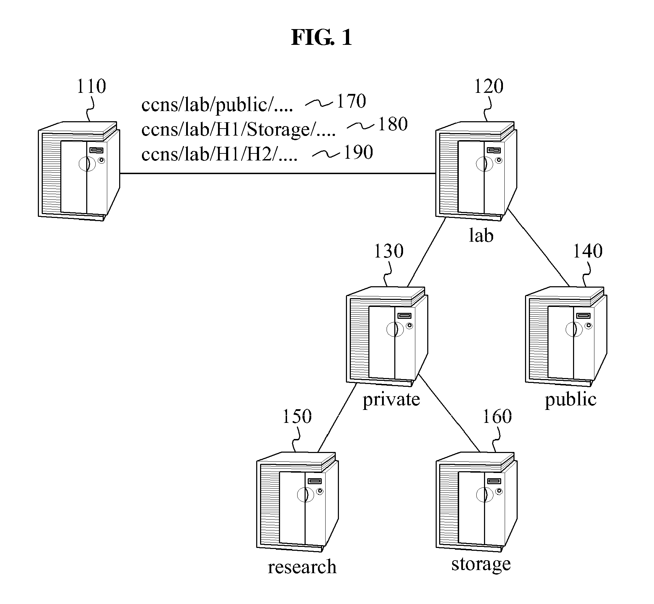

FIG. 1 illustrates an example of performing routing using a content address, according to an example embodiment.

In the embodiment shown in FIG. 1, a computer 110 is employed for creation, processing, and consumption of content. In FIG. 1, at least some of the content is stored outside of the computer 110. In this example, the computer 110 accesses the stored content using a network. To access the content using the network, the computer 110 uses an address of the content. Such an address allows the computer 110 to identify the content. By identifying the content, the computer 110 is able to inform the network of where to look for the content and which specific piece of content the computer is to process. For example, when content is stored in an external server, such as external server 150, the computer 110 accesses the content using an address of the external server 150 such as an Internet protocol (IP) of the external server 150. Such an address provides the part of the identification, discussed above, that identifies which external server the information is located at. Once the computer 110 establishes which external server to retrieve information from, it becomes possible to identify which specific piece of content to process and where on the server it is located.

As illustrated in the example embodiment of FIG. 1, when content is stored in one of external servers 120, 130, 140, 150, and 160 that are hierarchically configured, the computer 110 accesses the content by employing, as an address, a content name including names of the external servers 120, 130, 140, 150, and 160. In the example of FIG. 1, for example, external server 120 is "lab," external server 130 is "private," external server 140 is "public," external server 150 is "research," and external server 160 is "storage." As FIG. 1 illustrates, the external servers 120, 130, 140, 150, and 160 are arranged in a hierarchy based on how the external servers 120, 130, 140, 150, and 160 are communicatively coupled to one another.

Hereinafter, the computer 110 that accesses content using a network will be referred to as a content receiving node 110. A content storage node refers to a device to store content. In some embodiments, such a content storage node is configured to host content that is subsequently sent to and retrieved by a content receiving node 110. For example, the external servers 120, 130, 140, 150, and 160 may be content storage nodes that substantially store content in a hierarchical structure. A relay node refers to a device to relay a content name. For example, the external servers 120, 130, 140, 150, and 160 may be relay nodes that relay a content name in order to provide content. For example, since external server 130, "private," is located between external server 120 and external server 150, external server 130 may transmit a request to external server 150 and relay the response to that request. Hereinafter, the external servers 120, 130, 140, 150, and 160 may also be referred to as nodes 120, 130, 140, 150, and 160, respectively. Thus, nodes in the network may each have the ability to receive content, store content and relay content.

When content is stored in the node 140, a content name of the stored content may be determined to be "ccns/lab/public/..." 170. Here, "ccns" denotes a content-centric network (CCN) protocol capable of accessing the content using the content name. However, ccns is an arbitrary example and any network name supported by the network architecture is a potential name for the network. In this example content name, "lab" denotes a top domain that includes the node 140 storing the content, and "public" denotes a name of the node 140. The "..." at the end of "ccns/lab/public/..." 170 refers to the termination of the content name, which may include a further path that allows the network to find the location of the content, as well as the name of the content to be retrieved from the "public" node 140.

According to an embodiment, a portion of a hierarchical structure that includes the node 140 storing the content may become public. For example, "ccns/lab/public/..." 170 provides the information that the "lab" node 120 is located as an intermediate server that acts as a parent node in the hierarchy to the "public" node 140. Accordingly, privacy of users using the nodes 120, 130, 140, 150, and 160 included in the hierarchical structure may be infringed. In some situations if the content names are intercepted, an unauthorized user is able to gather information about the network structure that is intended to be hidden. Such information causes vulnerability to hacking, because if a potential hacker has information about a network structure that is intended to be hidden, it provides the potential hacker with an opportunity to ascertain weak spots and vulnerabilities of a network based on the network structure.

According to an embodiment, the embodiment protects privacy of a user by encrypting a name of predetermined nodes among names of the nodes 120, 130, 140, 150, and 160 that are hierarchically configured and would otherwise be included in the content name. For example, when content is stored in the node 160, a non-encrypted content name of the stored content is determined to be "ccns/lab/private/storage/..." as discussed above. However, as discussed, such a non-encrypted content name provides the information that such a content name accesses node 160 though nodes 120 and 130. Thus, to avoid this problem, an embodiment encrypts portions of the content name, as will be discussed further.

For example, the content receiving node 110 encrypts, to "H1" using a hash function, a name "private" of the node 130 that is an upper node of the node 160 storing the content. Accordingly, the content name of the stored content is encrypted to "ccns/lab/H1/storage/..." 180. However, "H1" is merely an example of a placeholder that may be generated by a hash function to encrypt a portion of the content name.

In this example, the content receiving node 110 transmits the content name "ccns/lab/H1/storage/..." 180 to the node 120 that is a top domain of the node 160 storing the content. The node 120 corresponding to the top domain determines that a name of the node 130 or 140 that is a neighboring child node of the node 120 is encrypted, in the content name "ccns/lab/H1/storage/..." 180. The node 120 corresponding to the top domain then decrypts the symbol "H1" that is an encrypted name of the neighboring child node. The node 120 corresponding to the top domain transmits an address for accessing the corresponding content to the node 130 whose name is encrypted. In the case of encrypting a content name using a hash function, there is no need to manage an encryption key used to perform encryption, as the secrecy of the encryption process is based upon the secrecy of the hash function. Thus, the use of such a hash function allows encryption of node names as discussed above, but the content reception node 110 and the other nodes 120, 130, 140, 150, and 160 in such an approach have no need to share the encryption key used to performed encryption. Accordingly, routing may be simplified and network overhead may decrease. However, since there is still encryption being performed, the example approach just disclosed provides security benefits.

Even though an embodiment providing for encrypting a name of only a single node is described above, an embodiment provides that a plurality of names among names of nodes included in a content name is encrypted. Some content names include node names corresponding to multiple levels of node hierarchy. For example, when content is stored in the node 150 as shown in FIG. 1, a non-encrypted content name of the stored content may be determined to be "ccns/lab/private/research/...". As before, such a non-encrypted content name includes information about the stored content that potentially jeopardizes system security. As an example way to manage this issue, the content receiving node 110 encrypts the name "private" of the node 130 to "H1" and encrypts a name "research" of the node 150 to "H2". As above, "H1" and "H2" are merely example symbols. In an example, "H1" and "H2" are derived by hashing the node names, as discussed above. Accordingly, the content name of the stored content may be encrypted to "ccns/lab/H1/H2/..." 190. If a content name encrypts the name of multiple nodes, the encrypted symbols used to represent the multiple nodes are decrypted to access the content references by the encrypted address. For example, the encrypted symbols may be decrypted progressively as node connections are traversed.

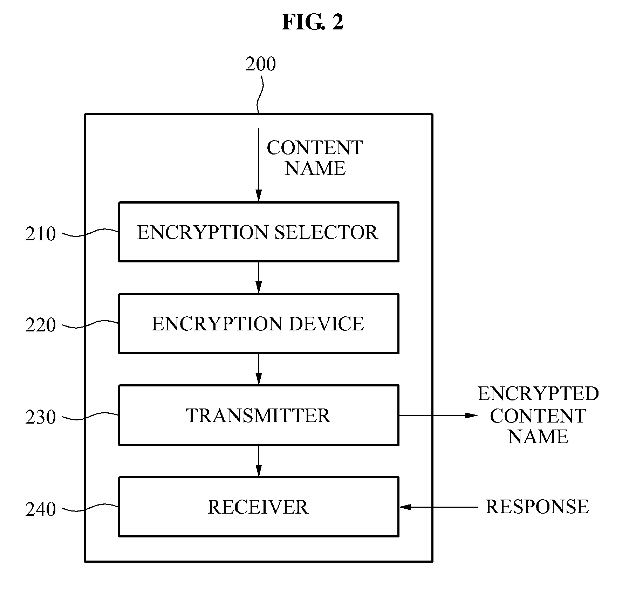

FIG. 2 illustrates an example of a content receiving node 200, according to an example embodiment.

Referring to FIG. 2, the content receiving node 200 may include an encryption selector 210, an encryption device 220, and a transmitter 230.

The encryption selector 210 selects a name to be encrypted from a content name including names of a content storage node storing content and upper nodes of the content storage node. As discussed above, the original content name identifies a hierarchy of nodes to traverse to access the content, and the node names are not encrypted.

The encryption selector 210 receives the content name. In an embodiment, such as that of FIG. 1, the content is stored in a hierarchically configured node structure, instead of being stored in the content receiving node 200. Such a node structure includes the content storage node storing the content and the parent nodes of the content storage node that provide a route from the content receiving node 200 to the content storage node. For example, the parent nodes are relay nodes as discussed above that relay content from the content storage node to content receiving node 200. In this example, the content name includes the name of the content storage node and the names of parent nodes of the content storage node. The content name may also include an identifier of a top domain of a computer network in which the content storage node is included. The encryption selector 210 selects a name to be encrypted from among names of nodes that are included in the content name.

The encryption device 220 encrypts the selected name. For example, the encryption device 220 encrypts the selected name using a hash function. In such an example, the hash function is a type of a one-way function that maps names of nodes that are to be encrypted to hashed values. Such a hash function generates an output value from a given input based on a certain algorithm, but makes it different to generating the input from the output value. When a hash value that is an output of the hash function is different, an input value of the hash function is different. Thus, a hash function provides an approach where nodes that are entitled to have access to other nodes are able to use the hashed values to figured out the identity of the nodes, but the information included in such an encrypted content name is limited. Due to the above characteristics, the hash function may be used to verify integrity of data and to authenticate a message. Such a hash function provides access to authorized users without jeopardizing the security of the network by providing inappropriate insights into network architecture.

In an example, when a content name is "ccns/lab/private/storage/...", the encryption selector 210 selects a name "private" of a node as a name to be encrypted. The encryption device 220 encrypts the name "private" of the node to "H1" as discussed above. In this example, the encrypted content name may be "ccns/lab/H1/storage/...".

In this example, the encryption device 220 stores the selected name "private" and the encrypted name "H1".

The transmitter 230 transmits, to the content storage node, for example, the node 160 of FIG. 1, the encrypted content name "ccns/lab/H1/storage/..." including the encrypted name H1.

The receiver 240 receives a response to the encrypted content name "ccns/lab/H1/storage/..." from the content storage node. In an example, the response to the encrypted content name includes the encrypted name "H1". Accordingly, based on the encrypted name alone, it may be difficult for the receiver 240 to determine to which content name the received response corresponds. In this example, the receiver 240 verifies that the received response is a response to the content name "ccns/lab/private/storage/..." using the selected unencrypted name "private" that corresponds to the encrypted name "H1".

In one embodiment, a response to a content name includes a portion of or all of the content corresponding to the content name.

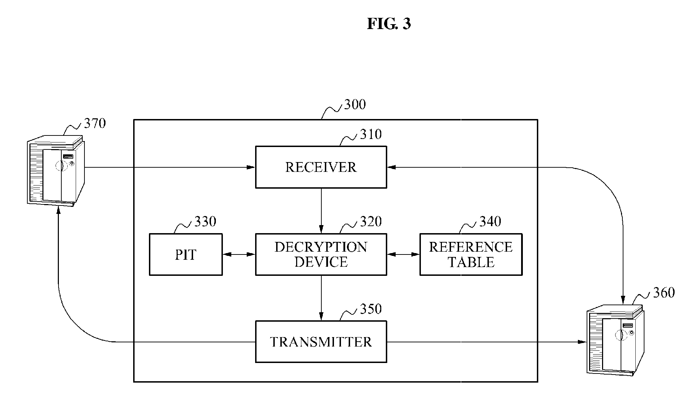

FIG. 3 illustrates an example of a relay node 300, according to an example embodiment. Referring to FIG. 3, the relay node 300 includes a receiver 310, a decryption device 320, a pending interest table (PIT) 330, a reference table 340, and a transmitter 350.

In FIG. 3, the relay node 300 is included in a hierarchical structure that is a portion of a computer network. Content is stored in a content storage node included in the computer network. In this example, the relay node 300 is a parent node of the content storage node. The relay node 300 may include a plurality of child nodes. For example, there may be a plurality of child nodes disposed in the hierarchical structure below the relay node 300.

In FIG. 3, the receiver 310 receives a content name. A node 370 that sends a content name that is received by the receiver 310 may be a parent node of the relay node 300 and may also be a general router. In an embodiment, a content name includes a name of the content storage node and one or more names of parent nodes of the content storage node. By including such names, the content name defines a path through the network hierarchy that provides a way to access the desired content storage node to access the content. As discussed above, at least one of names of nodes included in the content name is encrypted, such as by using a hash function. Hereinafter, that the discussion will refer to an example unencrypted content name that is "ccns/lab/private/research/..." and an example encrypted content name received by the receiver 310 that is "ccns/lab/private/H2/...". As noted previously, "research" is hashed to provide the symbol "H2."

The decryption device 320 determines whether a name of a node corresponding to a neighboring child node of the relay node 300 is encrypted, in the received content name. When the name of the neighboring child node of the relay node 300 is encrypted, the decryption device 320 decrypts the name of the neighboring child node to help identify the neighboring child node.

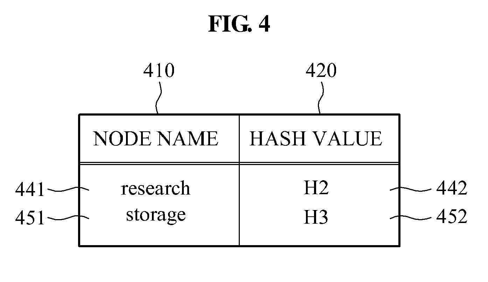

In an example embodiment, the decryption device 320 performs decryption using the reference table 340. Hereinafter, a configuration of performing decryption using a reference table according to an embodiment will be described further with reference to FIG. 4.

FIG. 4 illustrates an example of a reference table, according to an example embodiment.

The reference table of FIG. 4 is generated based on the assumption that the node 130 with the name "private" of FIG. 1 operates as a relay node in the hierarchical node structure of FIG. 1. Hereinafter, the node 130 may also be referred to as the relay node 130. In the context of FIG. 1, relay node 130 relays content between node 120 and nodes 150 and 160.

For example, the reference table includes a column 410 for storing an unencrypted name of a node and a column 420 for storing a hash value in which the unencrypted name of the node is encrypted using a hash function. As discussed previously, the unencrypted name allows access to nodes in the node hierarchy, but revealing unencrypted names presents a security risk. Referring to the reference table, when the name of the node is "research" 441, the hash value is "H2" 442. When the name of the node is "storage" 451, the hash value is "H3" 452. Thus, the reference table maps unencrypted names to their hash values, providing a way to decrypt hash values back to the appropriate unencrypted names.

Here, it is assumed that a name of a neighboring child node of the relay node 130 is encrypted in a content name received by the relay node 130, and an encrypted value is "H2" 442.

The decryption device 320 of the relay node 130 may discover "H2" 442 in the encrypted content name, and determines that the name of the neighboring child node of the relay node 130 is encrypted. Since the content name is encrypted, the relay node 130 may not be able to determine which node is the one that stores the content corresponding to the content name, among child nodes of the relay node 130. For example, the node 150 with the name "research" and the node 160 with the name "storage" are both children of the relay node 130, so "H2" 442, without more, may not provide a clear indication of which child node to use when retrieving the content.

To resolve which child node to use, the decryption device 320 searches the column 420 of the reference table that stores a hash value. For example, the decryption device 320 searches the column 420 for "H2" 442 that is a hash value in which the name of the neighboring child node is encrypted, and may search the reference table for the name "research" 441 of the node corresponding to the hash value "H2" 442.

In this example, the decryption device 320 decrypts the content name using the name "research" 441 of the node that is retrieved from the reference table, based on its correspondence to the hash value "H2" 442. The decryption device 320 determines that the content corresponding to the content name is stored in the node 150 among the node 150 with the name "research" and the node 160 with the name "storage" because the hash value "H2" 442 corresponds to the name "research" 441 of node 150.

The transmitter 350 transmits the content name to the adjacent child node corresponding to the decrypted name of the node. For example, the transmitter 350 transmits the content name to the child node 360 with the name "research".

The receiver 310 receives a response to the transmitted content name from the child node 360 that is a neighboring child node of the node 370. For example, the response to the content name includes a portion of or all of the content corresponding to the content name. The response to the content name may include the content name that is transmitted from the transmitter 350 to the child node 360. In an embodiment, by using the response to the content name, the receiver 310 verifies to which content name the received response corresponds.

After the receiver 310 receives the response, the transmitter 350 forwards the response to the content name to a parent node or a router, for example, the node 370. In an example, the forwarded response is transmitted to the content receiving node, which provides the content to the content receiving node.

According to an example, the response received by the receiver 310 from the neighboring child node includes an unencrypted content name. The transmitter 350 encrypts the unencrypted content name by replacing an unencrypted name of a neighboring child node with the encrypted name of the neighboring child node. The transmitter 350 forwards, to the parent node or the router, the response that includes the encrypted content name.

In order to determine to which content receiving node a response to each content name is to be transmitted, the relay node 300 stores, in the PIT 330, information regarding content receiving nodes from which the respective content names are received. For example, the relay node 300 stores, in the PIT 330, the content name and information associated with the parent node or the router, for example, information related to the node 370 that receives the content name.

For example, the decryption device 320 stores, in the PIT 330, the content name that includes the decrypted name of the neighboring child node, for example, "research".

The content name transmitted from the transmitter 350 to the child node 360 with the name "research" may be unencrypted. The name "research" of the child node 360 included in the response received by the receiver 310 may also be unencrypted.

In the above example, the transmitter 350 easily retrieves, from the PIT 330, the content name that includes the unencrypted name "research". The transmitter 350 obtains, from the PIT 330, information associated with the parent node or the router corresponding to the content name. Continuing this example, the transmitter 350 performs encryption by replacing the name "research" of the child node 360 with "H2". The transmitter 350 forwards, to the parent node or the router, for example, the node 370, the response in which the content name is encrypted.

In an embodiment, the decryption device 320 additionally stores a flag indicating that the decrypted name of the neighboring child node, for example, "research" is to be re-encrypted and be forwarded. The transmitter 350 replaces the name "research" of the lower node 360 with "H2" by referring to the flag.

The decryption device 320 stores, in the PIT 330, the encrypted name of the neighboring child node, for example, "H2". In this example, it is not the content name that includes the decrypted name "research", but the content name that includes the encrypted name "H2", that is be stored in the PIT 330.

In this example, the name of the neighboring child node, for example, "research" included in the response received by the receiver 310 is unencrypted. Thus, in this example, the transmitter 350 encrypts the unencrypted name "research" to "H2". The transmitter 350 subsequently searches the PIT 330 for the encrypted name "H2", and obtains information associated with the parent node or the router, for example, the node 370 to which the content name is to be transmitted. Accordingly, the transmitter 350 performs encryption by replacing the name "research" of the lower node 360 with "H2" again. The transmitter 350 forwards, to the parent node or the router, for example, the node 370, the response in which the content name is encrypted. For example, when the encrypted name "H2" is present within the PIT 330, the transmitter 350 forwards the response to the parent node or the router, such as the node 370.

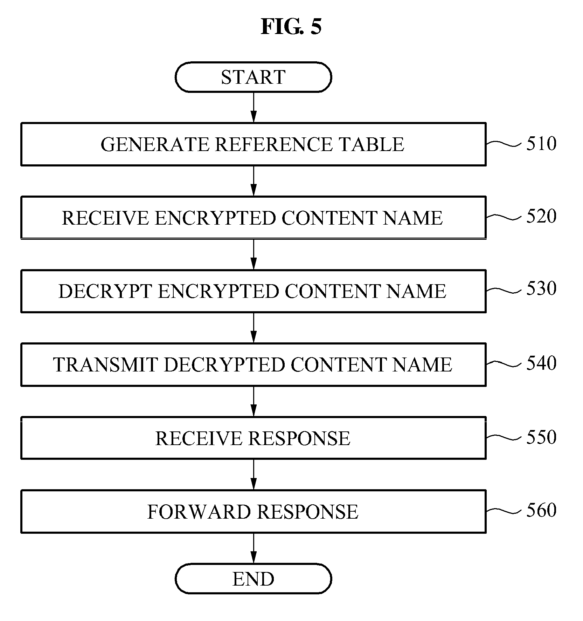

FIG. 5 illustrates an example of a relaying method of a relay node, according to an example embodiment.

The relay node may include a plurality of child nodes.

In operation 510, the method generates a reference table including names of a plurality of neighboring child nodes and hash values in which the names of the plurality of neighboring child nodes are encrypted using a hash function. In an example, the generated reference table has a form similar to the reference table of FIG. 4.

In operation 520, the method receives an encrypted content name from a parent node or a router. For example, the encrypted content name includes a name of the relay node and names of neighboring child nodes of the relay node of which at least one name is encrypted using the hash function.

In operation 530, the method decrypts the encrypted name of the neighboring child node. For example, the relay node searches the reference table for the encrypted name of the neighboring child node and decrypts the encrypted name of the neighboring child node based on the results of the search of the reference table.

In operation 540, the method transmits the content name to the neighboring child node corresponding to the decrypted name among a plurality of neighboring child nodes of the relay node. Because the name is the decrypted name, there is no ambiguity about which of the neighboring child nodes the decrypted name refers to.

In operation 550, the method receives a response to the transmitted content name from the neighboring child node. In an example, the response includes a portion of or all of the content corresponding to the transmitted content name.

According to an embodiment, the response to the content name may include the content name that is transmitted from the relay node to the neighboring child node. The relay node may verify to which content name the received response corresponds, using the content name included in the response to the content name.

In operation 560, the method forwards the received response to the parent node or the router. For example, the response received by the relay node from the neighboring child node includes an unencrypted content name. In this example, the relay node encrypts the unencrypted content name by replacing an unencrypted name of a neighboring child node with an encrypted name of the neighboring child node. The relay node forwards, to the parent node or the router, the response that includes the encrypted content name.

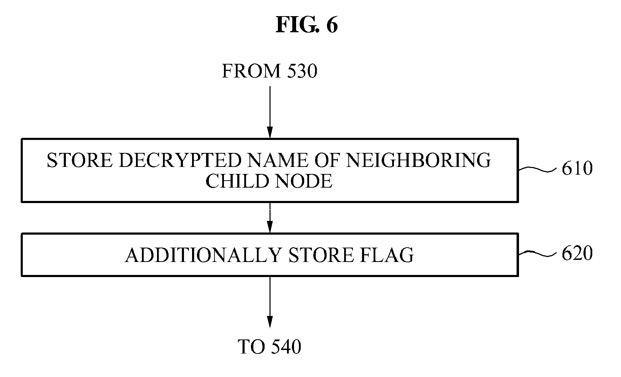

FIG. 6 illustrates an example of an operation of storing a decrypted name of a neighboring child node in the relaying method of FIG. 5, according to an example embodiment.

In operation 610, the method stores, in a PIT, the content name that includes the decrypted name of the neighboring child node. According to an example, a name of a neighboring child node included in the response that is received by the relay node from the neighboring child node may be unencrypted.

In the above example, the relay node searches the PIT for the content name that includes the unencrypted name of the neighboring child node. The relay node obtains, from the PIT, information associated with the parent node or the router corresponding to the content name. For example, the relay node encrypts the content name by replacing the unencrypted name of the neighboring child node with the encrypted name of the neighboring child node. The relay node forwards, to the parent node or the router, the response in which the content name is encrypted.

In operation 620, the method additionally stores a flag indicating that the unencrypted name of the neighboring child node is to be encrypted and be forwarded. For example, the relay node replaces the unencrypted name of the neighboring child node with the encrypted name of the neighboring child node by referring to the flag.

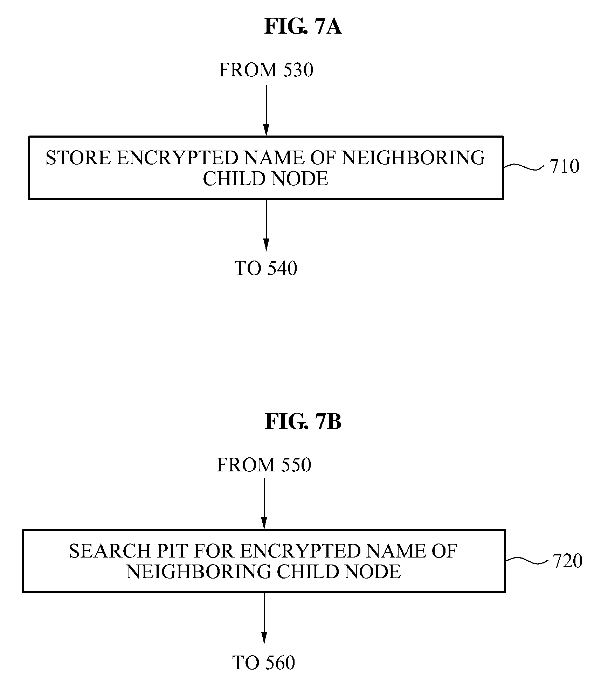

FIGS. 7A and 7B illustrate examples of an operation of storing an encrypted name of a neighboring child node in the relaying method of FIG. 5, according to an example embodiment.

In operation 710, the method stores the encrypted name of the neighboring child node in the PIT. In this example, not a decrypted content name but an encrypted content name is stored in the PIT.

The name of the neighboring child node received by the relay node from the neighboring child node may be unencrypted. In operation 720, the method encrypts the unencrypted name of the neighboring child node. For example, the relay node searches the PIT for the encrypted name of the neighboring child node, and obtains information associated with the parent node or the router to which the content name is to be transmitted.

For example, the relay node forwards, to the parent node or the router, the response in which the content name is encrypted. Only when the encrypted name is present within the PIT, the relay node forwards the response to the parent node or the router.

The examples of a content-centric network (CCN) described may improve security for such a network environment. Other architectures for a CCN transmit unencrypted content names, and when such unencrypted content names are intercepted it provides hackers and unauthorized users with information that they may exploit to jeopardize network security. By contrast, the examples of a content-centric network (CCN) encrypt and manage content name information in a manner such that it is still possible to access content, but even if the content name information is intercepted, hashing is used so that an eavesdropper would not be able to use the content name information to jeopardize network security.

The apparatuses and units described herein may be implemented using hardware components. The hardware components may include, for example, controllers, sensors, processors, generators, drivers, and other equivalent electronic components. The hardware components may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The hardware components may run an operating system (OS) and one or more software applications that run on the OS. The hardware components also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a hardware component may include multiple processors or a processor and a controller. In addition, different processing configurations are possible, such a parallel processors.

The methods described above can be written as a computer program, a piece of code, an instruction, or some combination thereof, for independently or collectively instructing or configuring the processing device to operate as desired. Software and data may be embodied permanently or temporarily in any type of machine, component, physical or virtual equipment, computer storage medium or device that is capable of providing instructions or data to or being interpreted by the processing device. The software also may be distributed over network coupled computer systems so that the software is stored and executed in a distributed fashion. In particular, the software and data may be stored by one or more non-transitory computer readable recording mediums. The media may also include, alone or in combination with the software program instructions, data files, data structures, and the like. The non-transitory computer readable recording medium may include any data storage device that can store data that can be thereafter read by a computer system or processing device. Examples of the non-transitory computer readable recording medium include read-only memory (ROM), random-access memory (RAM), Compact Disc Read-only Memory (CD-ROMs), magnetic tapes, USBs, floppy disks, hard disks, optical recording media (e.g., CD-ROMs, or DVDs), and PC interfaces (e.g., PCI, PCI-express, WiFi, etc.). In addition, functional programs, codes, and code segments for accomplishing the example disclosed herein can be construed by programmers skilled in the art based on the flow diagrams and block diagrams of the figures and their corresponding descriptions as provided herein.

As a non-exhaustive illustration only, a terminal/device/unit described herein may refer to mobile devices such as, for example, a cellular phone, a smart phone, a wearable smart device (such as, for example, a ring, a watch, a pair of glasses, a bracelet, an ankle bracket, a belt, a necklace, an earring, a headband, a helmet, a device embedded in the cloths or the like), a personal computer (PC), a tablet personal computer (tablet), a phablet, a personal digital assistant (PDA), a digital camera, a portable game console, an MP3 player, a portable/personal multimedia player (PMP), a handheld e-book, an ultra mobile personal computer (UMPC), a portable lab-top PC, a global positioning system (GPS) navigation, and devices such as a high definition television (HDTV), an optical disc player, a DVD player, a Blue-ray player, a setup box, or any other device capable of wireless communication or network communication consistent with that disclosed herein. In a non-exhaustive example, the wearable device may be self-mountable on the body of the user, such as, for example, the glasses or the bracelet. In another non-exhaustive example, the wearable device may be mounted on the body of the user through an attaching device, such as, for example, attaching a smart phone or a tablet to the arm of a user using an armband, or hanging the wearable device around the neck of a user using a lanyard.

A computing system or a computer may include a microprocessor that is electrically connected to a bus, a user interface, and a memory controller, and may further include a flash memory device. The flash memory device may store N-bit data via the memory controller. The N-bit data may be data that has been processed and/or is to be processed by the microprocessor, and N may be an integer equal to or greater than 1. If the computing system or computer is a mobile device, a battery may be provided to supply power to operate the computing system or computer. It will be apparent to one of ordinary skill in the art that the computing system or computer may further include an application chipset, a camera image processor, a mobile Dynamic Random Access Memory (DRAM), and any other device known to one of ordinary skill in the art to be included in a computing system or computer. The memory controller and the flash memory device may constitute a solid-state drive or disk

(SSD) that uses a non-volatile memory to store data.

While this disclosure includes specific examples, it will be apparent to one of ordinary skill in the art that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A content receiving node for receiving content stored in a content storage node in a hierarchical network of nodes using a content name for addressing the content, the content name comprising names of the content storage node and at least one parent node of
the content storage node, the content receiving node comprising:
an encryption selector configured to select a name to be encrypted from the names included in the content name;
an encryption device configured to encrypt the selected name; and
a transmitter configured to transmit, to the content storage node, an encrypted content name comprising the encrypted name.

2. The content receiving node of claim 1, wherein the encryption device is configured to encrypt the selected name using a hash function.

3. The content receiving node of claim 1 or 2, further comprising:
a receiver configured to receive a response to the encrypted content name from the content storage node, wherein the encryption device is configured to store the selected name and the encrypted name, and the receiver is configured to verify whether the received response is a response corresponding to the encrypted content name, based on the selected name and the encrypted name.

4. A relay node for relaying content in a hierarchical network of nodes, the relay node comprising:
a receiver configured to receive a content name for addressing the content, the content name comprising names of a content storage node storing the content and at least one parent node of the content storage node, wherein at least one of the names included in the content name is encrypted;
a decryption device configured to decrypt an encrypted name of a neighboring child node of the relay node when the name of the neighboring child node is an encrypted name among names of nodes included in the content name; and
a transmitter configured to transmit the content name to the neighboring child node corresponding to the decrypted name.

5. The relay node of claim 4, wherein the at least one name is encrypted using a hash function.

6. The relay node of claim 5, wherein:
the relay node is connected to a plurality of neighboring child nodes,
the relay node further comprises a reference table comprising names of the plurality of neighboring child nodes and associated hash values corresponding to the names of the plurality of neighboring child nodes encrypted using the hash function, and
the decryption device is configured to search the reference table for the encrypted name associated with the neighboring child node that is included in the content name, and to decrypt the encrypted name of the neighboring child node.

7. The relay node of claim 5, 6 or 7, wherein the receiver is configured to receive a response to the transmitted content name from the neighboring child node.

8. The relay node of claim 7, wherein the transmitter is configured to forward the response by replacing an unencrypted name of the neighboring child node included in the response with the encrypted name of the neighboring child node.

9. The relay node of claim 8, wherein the decryption device is configured to store the decrypted name of the neighboring child node and the decryption device is configured to additionally store a flag indicating that the unencrypted name of the neighboring child node is to be encrypted and be forwarded, and
the transmitter is configured to replace the unencrypted name of the neighboring child node included in the response with the encrypted name of the neighboring child node by referring to the flag.

10. The relay node of claim 7, 8 or 9, wherein the decryption device is configured to store the encrypted name of the neighboring child node in a pending interest table (PIT) and the transmitter is configured to search the PIT for the encrypted name of the neighboring child node from which the response is received, and to forward the response when the encrypted name of the neighboring child node is present within the PIT.

11. A content relaying method of a relay node in a hierarchical network of nodes, the method, comprising:
receiving a content name for addressing the content, the content name comprising names of a content storage node storing the content and at least one parent node of the content storage node, wherein at least one of the names included in the content name is encrypted;
decrypting an encrypted name of a neighboring node of the relay node when the name of the neighboring child node is an encrypted name among names of nodes included in the content name; and
transmitting the content name to the neighboring child node corresponding to the decrypted name.

12. The method of claim 11, wherein:
the relay node is connected to a plurality of neighboring child nodes, and
the method further comprises:
generating a reference table comprising names of the plurality of neighboring child nodes and associated hash values corresponding to the names of the plurality of neighboring child nodes encrypted using the hash function, and
the decrypting comprises searching the reference table for the encrypted name associated with the neighboring child node that is included in the content name, and decrypting the encrypted name of the neighboring child node.

13. The method of claim 11 or 12, further comprising:
receiving a response to the transmitted content name from the neighboring child node; and
forwarding the response by replacing an unencrypted name of the neighboring child node included in the response with the encrypted name of the neighboring child node.

14. The method of claim 12 or 13, further comprising:
storing the decrypted name of the neighboring child node, the method preferably further comprising:
additionally storing a flag indicating that the unencrypted name of the neighboring child node is to be encrypted and be forwarded,
wherein the forwarding comprises replacing the unencrypted name of the neighboring child node included in the response with the encrypted name of the neighboring child node response by referring to the flag.

15. The method of claim 12, 13 or 14, further comprising:
storing the encrypted name of the neighboring child node in a pending interest table (PIT); and
searching the PIT for the encrypted name of the neighboring child node from which the response is received; and
forwarding the response when the encrypted name of the neighboring child node is present within the PIT.
